# DEMANDE DE BREVET EUROPEEN

(11) **EP 2 295 765 A1**
(43) Date de publication de la demande: **16.03.2011**
(21) Numéro de dépôt: 10358007.2
(22) Date de dépôt: 07.09.2010
(51) Int. Cl.: F02C 7/143, F02B 29/04, F25B 15/04, F25B 15/06

(54) **Procédé de réfrigération d'air autonome, adaptable aux moteurs thermiques, dont les turbines à combustion**

(30) Priorité: 14.09.2009 FR 0904355
(71) Demandeur: Bech, Jean André, F-13007 Marseille (FR)
(72) Inventeur: Bech, Jean André, F-13007 Marseille (FR)

(57) **Abrégé**

Le secteur technique de l'invention est celui du perfectionnement des cycles régissant le fonctionnement des moteurs thermiques: Elle consiste en un « inter-cooler » permettant de refroidir le flux d'air travaillant d'un quelconque moteur thermique volumétrique, mais qui est aussi applicable à certains types de turbines à combustion entre leurs étages de compression, afin d'améliorer le rendement global de tels moteurs, donc d'en réduire la consommation spécifique et par conséquent, le taux d'émissions nocives. L'innovation réside ici dans la production du froid nécessaire au moyen d'une machine frigorifique à absorption liquide utilisant de la chaleur disponible et/ou récupérable: Soit dans le cas d'un moteur volumétrique à aspiration naturelle, celle contenue dans l'air chaud aspiré, soit dans le cas d'un moteur suralimenté, celle qui résulte de la compression de cet air par son turbo, soit pour un turbo-moteur , celle de l'air à refroidir entre ses étages de compression, ainsi qu'en chacun de ces divers cas, celle disponible en leurs organes ou fluides qu'il convient de refroidir. De tels réfrigérants d'air autonomes sont avantageusement adaptables à tous moteurs volumétriques suralimentés ou non et à certaines turbines à combustion, pour remplacer leur «inter-cooler» existant, non-autonome et de performances limitées par l'utilisation de l'eau de refroidissement du moteur et/ou d'air atmosphérique, celà avec une gamme de modèles pour diverses puissances, sous forme d'un ensemble monobloc selon la **Fig.1****, PL1/2** ou la Fig 2, PL. 2/2.

## Description

La présente invention concerne l'incorporation, ***dans tous les types de moteurs thermiques volumétriques comme dans les turbines à combustion**,* d'un système autonome producteur de froid, afin d'améliorer leur rendement global par abaissement de la température de leur flux d'air travaillant, donc capable de réduire leur consommation spécifique de combustible et, par conséquent, l'importance de leurs émissions polluantes.

**Le secteur technique de l'invention** est celui du perfectionnement des cycles thermodynamiques régissant le fonctionnement des moteurs, au moyen d'une production de froid par circulation d'un fluide frigorigène.

Car ces cycles utilisent des compressions et on sait que pour comprimer un gaz, la compression isotherme exige moins d'énergie que la compression adiabatique (sans échange de chaleur). En fait, celle obtenue au moyen d'un compresseur ou de plusieurs en série, n'est pas adiabatique, mais «polytropique »: Toute compression s'accompagne en effet d'échanges de chaleur avec l'extérieur qui constituent une perte d'énergie et réduisent d'autant son rendement. L'idéal serait de pratiquer la compression isotherme d'une manière continue, c'est à dire avec refroidissement continuel du gaz au fur et à mesure qu'il est compressé:
Or ce n'est pas réalisable pratiquement. Mais comme la plupart des compressions se font en plusieurs étages successifs, on peut effectuer un refroidissement entre chacun de ces étages. Encore faut-il disposer d'une source suffisante de froid, véhiculé par un fluide à température convenable: Par exemple, une circulation d'eau froide ou avec l'air atmosphérique pris à la température ambiante et soufflé par un ventilateur sur la surface interne ou externe d'un faisceau échangeur de chaleur, l'autre étant au contact et léchée par le flux à refroidir.

**Dans l'état actuel de la technique,** tous les procédés de refroidissement utilisés à cette fin ont besoin d'une source de froid externe, préexistante et disponible. De nombreux moteurs thermiques à pistons ou rotatifs suralimentés par « turbo-chargers », à essence et/ou diesel, dits « avec inter-cooler » en sont équipés, plus rarement pour des turbo-moteurs et/ou turbo-propulseurs. Mais tous ont besoin pour celà d'échangeurs de chaleur d'autant plus performants que la température initiale de ce fluide réfrigérant disponible est élevée et par conséquent exige un plus fort débit: D'où un encombrement et poids importants qui, avec la dépense d'énergie nécessaire pour faire circuler ce fluide, limitent leur emploi, notamment dans le cas des échangeurs air/air. Hors des applications marines ou fluviales, l'emploi de l'eau exige un radiateur ventilé par l'air atmosphérique. De sorte que l'efficacité de ces « inter-coolers eau /air» est moindre dans les zones tropicales où la puissance développée par tout moteur thermique est déjà réduite par la haute température de l'air ambiant aspiré.

Un autre moyen est envisageable quand le combustible qui alimente le moteur est un gaz liquéfié sous-pression, tel que du GPL (gaz de pétrole liquéfié sous 7,5 bar), du fait que pour pouvoir le brûler, il doit atteindre l'état de vapeur surchauffée: Donc après prélèvement au milieu extérieur de sa chaleur latente de vaporisation et de surchauffe, avec celle produite par sa détente. Mais ce procédé trouve sa limite du fait que le débit de GPL, déjà initialement faible, se trouve d'autant plus réduit que le gain de consommation est important: Inconvénient qui est à l'origine et motive la présente invention, où est substitué à ce frigorigène celui d'une machine frigorifique. Le dispositif selon l'invention permet ainsi de remédier à tous ces inconvénients en incorporant au système sa propre source de froid, indépendante et quasi-gratuite puisqu'elle ne dépense que de la chaleur disponible et récupérable. Avec cependant une petite consommation d'énergie, nécessaire pour alimenter un ventilateur et une électro-pompe.. ***L'innovation consiste donc à adapter un procédé de production de froid existant et connu comme réfrigérateur ou pour climatiser des locaux, mais qui n'a jamais été utilisé pratiquement à cet effet sur un quelconque moteur thermique, malgré les Brevets*** ERICKSON US 2009/0031999 & 1009/004 9836A1***.***

**Les applications** visées sont toutes celles où ce système s'avère avantageusement adaptable à un quelconque moteur thermique (à pistons ou rotatif) suralimenté à essence et/ou diesel, éventuellement pour remplacer leur « inter-cooler » existant, afin de réduire sensiblement leur consommation de combustible et émissions nocives. De même pour les turbo-moteurs à combustion, notamment pour ceux miniaturisés suivant le procédé objet du Brevet N°0607903 délivré le 06/11/2009: Ce perfectionnement leur est en effet indispensable pour atteindre un rendement global suffisamment élevé et être compétitifs face aux autres petits moteurs existants, dans la gamme de puissance concernée de 5 à 25 kW. Car ils utilisent des compresseurs centrifuges issus de « turbo-chargers » de petites tailles, dont le rendement est compris entre 60 et 72% au plus. Or, refroidir l'air refoulé de seulement quelques degrés permet de rehausser sensiblement le rendement final de la compression et par suite, le rendement global du moteur, comme ce serait obtenu avec un compresseur de rendement supérieur. **La caractéristique technique propre à l'invention** réside principalement dans l'adaptation à un quelconque moteur thermique suralimenté ou non, ou encore à un turbo-moteur à combustion ayant plusieurs étages de compression assurés par des compresseurs centrifuges, d'une ***machine frigorifique à absorption*** pour refroidir son flux d'air travaillant en ***utilisant de la chaleur disponible et*/*ou récupérable:*** Soit, dans le cas d'un moteur volumétrique à aspiration naturelle, celle contenue dans l'air chaud aspiré dans des condition tropicales (afin de rétablir sa puissance dans les conditions normales) soit dans le cas d'un moteur suralimenté, celle qui résulte de la compression de cet air par son turbo, quelles que soient ses conditions d'aspiration, soit encore celle disponible en certains de leurs organes ou fluides qu'il convient de refroidir. De même pour un turbo-moteur et aussi bien dans les conditions normales que tropicales, pour refroidir l'air travaillant là où c'est possible entre ses divers étages de compression, afin de rétablir sa puissance et/ou en améliorer le rendement global.

Il s'agit dans sa disposition de base, en correspondance avec la description qui va suivre, du système breveté en 1860 par Ferdinand CARRÉ, utilisant comme fluide frigorigène le couple AMMONIAC (NH3) + EAU (H2O). Mais l'autre couple utilisable, EAU (H2O) + BROMURE de LITHIUM (Li Br), est également retenu, ainsi que certains perfectionnements indispensables pour obtenir le résultat optimum: Non-seulement l'adjonction au système de base d'un «rectifieur de vapeur», mais aussi de 2 échangeurs supplémentaires entre «solution riche et solution pauvre » et entre « liquide et vapeur » pour en améliorer le coefficient de performances (COP).

Le fonctionnement et la description de ce système s'inspire du Cours de Mr. Pierre NEVEU intitulé « Machines trithermes à absorption liquide », publié et disponible sur Internet, en se fondant sur les schémas et résultats numériques qui y figurent, interprétés et adaptés pour un turbo-moteur miniaturisé à 3 étages de compression au moyen de 2 turbo-compresseurs: Un turbo-compresseur BP dont la turbine est aussi motrice (entraînant un alternateur), travaillant en série avec un turbo-compresseur HP à 2 étages et de rotation libre.

Cette adaptation consiste à y inclure 2 des 4 échangeurs de chaleur principaux de cette machine frigorifique, le « bouilleur » (ou désorbeur) et « l'évaporateur », entre le refoulement du compresseur BP et l'aspiration du 1^{er} étage HP. Les 2 autres échangeurs principaux du système, «l'absorbeur» et le «condenseur», y sont extérieurement accolés et refroidis par une ventilation commune d'air atmosphérique. Ces 4 éléments de base sont ainsi groupés en un ensemble constituant l'essentiel de cet appareil. Ses autres composants sont une électro-pompe, le « rectifieur de vapeur» et éventuellement les échangeurs supplémentaires « solution riche/solution pauvre » et/ou « liquide/vapeur ». Mais ces accessoires peuvent être fixés sur cet ensemble, formant ainsi avec ses tuyautages de liaison, un appareil distinct, monobloc et autonome.

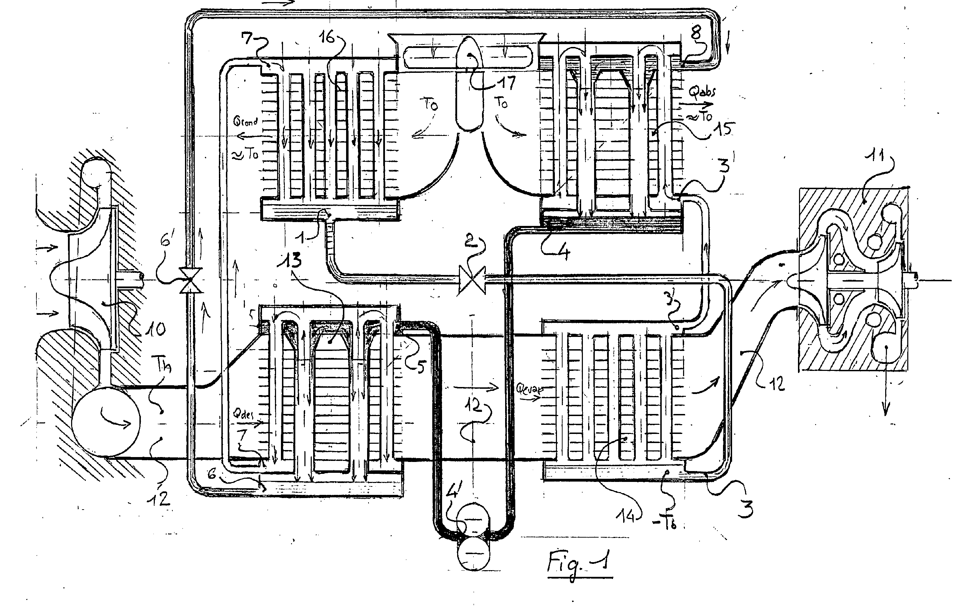

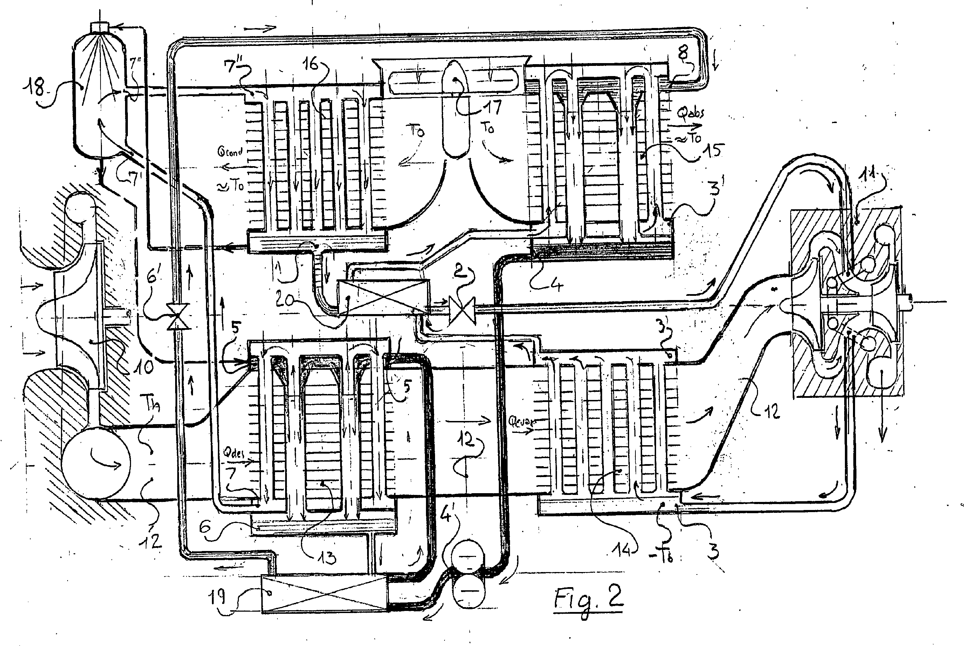

### DESCRIPTION selon planches 1/2 (Fig.1), 2/2 (Fig.2) et FONCTIONNEMENT:

- La Fig.1 représente la disposition générale de cette machine frigorifique à absorption, établie conformément aux schémas du Cours de Mr Pierre NEVEU où il précise « que la machine qui vient d'être décrite correspond à la forme brevetée par CARRÉ en 1860 ! ». Outre le fait qu'il est publié sur Internet, on retrouve ce schéma de principe dans le Grand Larousse Encyclopédique. Son utilisation ici est donc parfaitement licite. Mais son schéma de principe y est modifié, avec une représentation simplifiée différente de ses divers composants pour l'adapter à la configuration précédemment envisagée d'un turbo-moteur miniaturisé à 3 étages de compression, au moyen de 2 turbo-compresseurs: Un BP dont la turbine est aussi motrice (entraînant un alternateur) en série avec un HP à 2 étages et de rotation libre. Ces 2 compresseurs y sont schématiquement représentés, BP (10) à gauche et HP (11) à droite. En bas sont représentés 2 des 4 échangeurs de chaleur principaux: Le « désorbeur » (13) et «l'évaporateur » (14) placés sur le circuit d'air travaillant (12) à la température ***Th*** où est prélevée la quantité de chaleur ***Qdes+Qevap,*** le froid final à la température négative -***Tb*** étant produit dans l'évaporateur. Ces 4 appareils sont redessinés selon la disposition et le mode de construction nécessaires pour s'intégrer dans ce turbo-moteur, comme à tout autre type de moteur qui en serait doté. Au dessus sont représentés les 2 autres échangeurs principaux du système: « L'absorbeur » (15) et le «condenseur » (16), placés à l'extérieur du circuit d'air travaillant, mais très proches des précédents et refroidis par une ventilation commune d'air atmosphérique à la température ambiante ***To**,* au moyen du ventilateur (17) pour y évacuer la quantité de chaleur ***Qcond+Qabs*** à une température voisine de ***To**.* « L'absorbeur » est semblable au «désorbeur » mais de moindre épaisseur, la pression interne n'y étant que de 1 bar au lieu de 10. Au besoin, un appoint de chaleur récupéré sur des organes ou sur des fluides autres que l'air travaillant peut-être fourni au fluide frigorifere, avant ou après « désorbeur ».
- La Fig.2 représente la même machine avec dérivation du circuit liquide froid de (2) à (3) passant par le stator du compresseur HP (11) et les perfectionnements pouvant lui être apportés: Le « rectifieur » (18), l'échangeur (19) « solution riche/solution pauvre » (ou transmetteur interne) et l'échangeur « liquide/vapeur » (20). Comme pour toute machine frigorifique à absorption liquide, ce système fonctionne grâce à la faculté qu'ont certains liquides d'absorber ou désorber une vapeur, du fait que la solubilité de cette vapeur est dépendante de la pression et de la température auxquelles elle est soumise, la réaction étant exothermique dans le 1" cas et endothermique dans le 2^{ème}. La machine utilise donc un mélange binaire préalablement chargé, constitué par 2 composants liquides dont l'un, plus volatil que l'autre est appelé « fluide frigorigène » et l'autre « absorbant ». Le couple AMMONIAC (NH3, frigorigène) + EAU (H2O, absorbant) est ici retenu par commodité, mais ce choix n'exclut pas l'autre couple usuel: EAU + BROMURE de LITHIUM (LiBr) où l'eau est le frigorigène.

* ***Le cycle commence dans le désorbeur*** (13) où la solution *riche* en NH3 frigorigène refoulée en (5) par la pompe (4') sous 10 bar, ruisselle de haut en bas le long de la paroi interne de tubes d'assez fort diamètre pour que la vapeur qui s'y dégage puisse remonter à contre-courant. A cet effet leur entrée est en forme d'entonnoir où s'engage partiellement un tube de plus faible diamètre. Ce tube canalise l'écoulement du liquide le long de cette paroi du plus gros et amène cette vapeur dans une chambre supérieure, au dessus de (5), d'où elle repart vers le bas par d'autres de ces petits tubes vers une 1^{ère} chambre inférieure pour aller en (7) au condenseur. Le liquide chauffé par ruissellement est recueilli dans la 2^{ème} chambre inférieure (6), puis va au détendeur (6'). L'ensemble de ces tubes, réunis entre-eux par d'assez nombreuses plaques soudées pour obtenir la surface d'échange nécessaire, constitue le 1" faisceau échangeur de chaleur du système, placé dans le flux d'air travaillant refoulé à la température ***Th**,* ainsi refroidi une 1^{ère}fois en lui prélevant la quantité de chaleur ***Qdes.***
* ***Le condenseur*** (16), semblable à celui des machines à compression de vapeur, est constitué d'un simple faisceau à tubes ailettés, desservi par 2 chambres: Une supérieure où la vapeur entre en (7) et une inférieure qui recueille le condensat liquide formé dans les tubes dû au refroidissement de la surface d'échange par ventilation avec de l'air à la température ambiante ***To**.* Ce liquide sort en (1) sous 10 bar pour aller au détendeur (2). Ainsi est rejetée à l'atmosphère la quantité de chaleur de condensation ***Qcond*** à une température voisine de ***To**.*
* ***L'évaporateur*** (14), bien qu'il n'ait à supporter que 1 bar de pression au lieu de 10, est semblable au condenseur. Mais contrairement à lui, il est dans le flux d'air travaillant à refroidir, à la suite du désorbeur. Selon le circuit de principe, le liquide sortant en (1) du condenseur va directement à l'évaporateur après son passage au travers du détendeur (2) qui réduit sa pression à 1 bar et sa température à ***-Tb,*** fortement négative. Puis il s'y vaporise en y empruntant la quantité de chaleur ***Qevap*** à l'air travaillant, ainsi refroidi une 2^{ème} fois. Le circuit facultatif de la Fig.2 permet de profiter de cette température fortement négative ***-Tb*** pour refroidir aussi cet air travaillant entre les 2 étages du compresseur HP, dont stator (11) est aménageable en cet endroit pour y faire circuler un liquide très froid. Mais et conformément au principe, après cette dérivation le liquide revient en *solution pauvre* dans la chambre inférieure de l'évaporateur. Cet appauvrissement vient du dégagement de vapeur émis par la solution et qui, après passage dans cet échangeur, est collectée dans sa chambre supérieure à une température encore fortement négative et sort en (3) pour aller à l'absorbeur.
****L'absorbeur*** (15) est construit comme le désorbeur, mais refroidi par l'air atmosphérique à la température ambiante ***To*** soufflé par le ventilateur (17), rejettant ainsi à l'atmosphère la quantité de chaleur ***Qabs*** à une température voisine de ***To**.* Son faisceau échangeur est aussi à plaques soudées sur des petits et des gros tubes. Ces derniers communiquent avec une 1^{ère} chambre supérieure par un évasement en forme d'entonnoir, où s'engagent partiellement de plus petits tubes afin que la *solution pauvre* venant en (8) du détendeur (6') ruisselle sur leur paroi interne avec la vapeur au centre circulant dans le même sens: Car contrairement au désorbeur, il n'y a pas ici dégagement, mais absorption, donc seulement du *liquide enrichi* collecté dans une 1^{ère}chambre inférieure où il est aspiré par la pompe (4'). Juste au dessus est une 2^{ème} chambre inférieure où arrive en (3) la vapeur froide (à ***-Tb)*** venant de l'évaporateur, monte en (3') par les petits tubes pour déboucher dans une 2^{ème}chambre supérieure d'où elle va au contact de la *solution pauvre* à la sortie des entonnoirs.
****Le rectifieur*** (18 ) est indispensable pour que la vapeur d'ammoniac arrive quasiment pure au condenseur. Inséré dans le circuit sous 10 bar entre la sortie (7) du désorbeur et l'entrée (7") du condenseur, c'est un cylindre vertical avec en haut un arroseur diffusant en pluie un faible débit (quelques % de celui de la vapeur) de liquide froid prélevé au condenseur en (1) à une température voisine de ***To*** et sur le coté, la nouvelle sortie (7") vers le désorbeur. A sa base arrive en (7') la vapeur chaude à rectifier provenant du désorbeur et en (5) le liquide en excédent y retourne. Au cours de son refroidissement une partie de cette vapeur chaude est condensée, le liquide obtenu entre (5) et (7') est plus riche en eau et la vapeur en (7") plus riche en ammoniac.
******L'échangeur « solution riche*/*solution pauvre » (ou transmetteur interne)*** (19) est une option facultative permettant d'augmenter l'efficacité du système (COP) en préchauffant la *solution riche* sortant à environ ***To*** de l'absorbeur en (4) avant son entrée au désorbeur en (5). Ceci avec de la chaleur contenue dans la *solution appauvrie* qui sort du désorbeur en ( 6) à la température voisine de ***Th**,* au moyen d'un échangeur liquide/liquide par surfaces tubulaires inséré dans le circuit entre (4') et (5) d'une part et (6) et (6') d'autre part.
*** *L'échangeur « liquide*/*vapeur »*** (20) est une autre option facultative permettant d'augmenter davantage le COP par sous-refroidissement du liquide sortant du condenseur en (1) à une température voisine de ***To*** par surchauffe de la vapeur sortant en (3) à - ***Tb*** de l'évaporateur. C'est donc un échangeur liquide/gaz à tubes ailettés, inséré dans le circuit entre (1) et le détendeur (2) pour le liquide et entre (3) et (3') pour la vapeur.

## Revendications

1. ***Procédé*** permettant d'améliorer le rendement global de tous les genres de moteurs thermiques, qu'ils soient volumétriques à pistons ou rotatifs ou des turbines à combustion, par refroidissement de leur flux d'air travaillant, au moyen du froid produit par l'effet des réactions exothermiques et endothermiques d'une machine frigorifique à absorption liquide, ce refroidissement de l'air pouvant se faire à son aspiration, ou après sa compression par un ou plusieurs «turbo-chargers» ou après chacune de ses compressions successives pour les turbines à combustion.

2. ***Procédé selon la revendication 1*) caractérisé par** l'emploi nouveau pour produire le froid nécessaire au refroidissement de l'air travaillant d'un moteur thermique, d'une machine frigorifique à absorption liquide où la chaleur nécessaire pour la faire fonctionner selon son propre principe est fournie par ce moteur thermique, contenue dans cet air à refroidir et/ou récupérée sur certains de ses organes ainsi que sur les fluides qu'il utilise et qui nécessitent un refroidissement, donc sans aucune dépense de combustible à cet effet: De sorte que cet air y subit dans son «bouilleur-désorbeur» (13) un 1" refroidissement sans dépense d'énergie, suivi d'un 2^{ème} par le froid produit dans son «évaporateur» (14) au moyen de ces diverses sources de chaleurs.

3. ***Procédé selon les revendications 1) et 2)* caractérisé par** l'incorporation à un quelconque moteur thermique d'un ensemble constitué d'une machine frigorifique à absorption liquide construite pour fonctionner avec comme frigorigène le couple AMMONIAC + EAU, mais aussi avec le couple EAU + BROMURE DE LITHIUM et susceptible d'être améliorée par adjonction, outre d'un «rectifieur» (18) sur le circuit (7), devenant alors (7') et (7"), du perfectionnement consistant en deux échangeurs de chaleur supplémentaires: L'un (19) intercalé sur le circuit de refoulement de la «solution riche» entre la pompe (4') et la chambre (5) du «bouilleur-désorbeur» (13) pour échange avec la «solution pauvre» entre la chambre (6) et le «détendeur» (6'). L'autre (20) intercalé sur le circuit de la solution «liquide pauvre» entre la chambre (1) du «condenseur» (16) et le «détendeur» (2) pour échange avec le circuit de «vapeur» entre les chambres (3') de «l'évaporateur» (14) et de «l'absorbeur» (15).

4. ***Procédé selon les revendications 1), 2) et 3)* caractérisé en ce que** le ruissellement du haut vers le bas des solutions liquides dans le «désorbeur» (13) et «l'absorbeur» (15) y est obtenu au moyen de tubes évasés en entonnoir où s'engage partiellement un tube de plus petit diamètre, afin de constituer une tuyère canalisant et accélérant l'écoulement de ce liquide pour qu'il se fasse le long de la paroi interne des premiers et que le passage de la vapeur produite ou absorbée se fasse au centre.
